# EUROPÄISCHE PATENTSCHRIFT

(11) **EP 3 651 316 B1**
(45) Veröffentlichungstag und Bekanntmachung des Hinweises auf die Patenterteilung: **19.05.2021**
(21) Anmeldenummer: 19207635.4
(22) Anmeldetag: 07.11.2019
(51) Int. Cl.: H02K 1/27

(54) **ROTOR FÜR EINEN SYNCHRON-ANTRIEBSMOTOR**
ROTOR FOR A SYNCHRONOUS DRIVE MOTOR
ROTOR POUR UN MOTEUR À ENTRAÎNEMENT SYNCHRONE

(30) Priorität: 09.11.2018 DE 102018128146
(43) Veröffentlichungstag der Anmeldung: 13.05.2020
(73) Patentinhaber: BRUSA Elektronik AG, 9466 Sennwald (CH)
(72) Erfinder: ZHOU, Tian, 6015 Luzern (CH); OESCHGER, Daniel, 9015 St. Gallen (CH); TEUFEL, Raphael, 72186 Empfingen (DE); MUNTEAN, Adina, 9473 Gams (CH)
(74) Vertreter: Rösler Rasch van der Heide & Partner

(56) Entgegenhaltungen:
- WO-A1-2016/198468
- WO-A1-2018/051690
- WO-A1-2018/095968
- CN-A- 106 300 735
- DE-A1-102016 102 665
- DE-A1-102016 208 042

## Beschreibung

Die Erfindung betrifft einen Rotor für einen Synchron-Antriebsmotor eines elektrisch betriebenen Kraftfahrzeugs mit mehreren Rotorpolen, wobei jeder Rotorpol mindestens drei hinter einander angeordnete U-förmige Magnetlagen aufweist, und jede Magnetlage eine Reihe von mindestens drei Kavitäten umfasst, von denen mindestens die inneren Kavitäten mit permanentmagnetischem Material gefüllt sind und ferner die beiden äußeren Kavitäten zu einem zu einem Stator hin gebildeten Rotorspalt jeweils mit einem Außensteg abgeschlossen sind. Die Erfindung betrifft ferner einen damit versehenen Synchron-Antriebsmotor sowie ein mit einem solchen Antriebsmotor versehenes Kraftfahrzeug.

Synchron-Antriebsmotoren werden vielfach als Antriebsmaschine für Elektrofahrzeuge verwendet, weil diese über dem gesamten Geschwindigkeitsbereich ein hohes Drehmoment und damit eine hohe Leistungsdichte aufweisen und bei geringem Gewicht eine hohe Fahrdynamik des angetriebenen Fahrzeugs gewährleisten. Insbesondere weisen derartige Motoren hohe Essonsche Ausnutzungsziffern auf, so dass ein hohes Kosten-Leistungsverhältnis erreicht werden kann.

DE 10 2016 102 665 A1, WO 2018/051690 A1 und DE 10 2016 208042 A1 offenbaren Rotoren für Synchronmaschinen.

Bei Hybrid-Sychronmotoren (HSM) setzt sich das Drehmoment aus zwei Komponenten zusammen, nämlich dem Reluktanzmoment und dem Synchronmoment wobei es wünschenswert ist, den Anteil des Reluktanzmoments am Gesamtdrehmoment so weit wie möglich zu erhöhen, idealerweise 50% oder höher.

Die Rotoren von Synchron-Antriebsmotoren weisen mehrere Pole auf, wobei jedem Pol vergrabene Magnetlagen zugeordnet werden, die im wesentlichen U-förmig symmetrisch um die Polmittelachsen (nämlich d-Achse) angeordnet sind und aus einer Reihe von Kavitäten bestehen, in denen Permanentmagneten angeordnet sind. Meist bleiben die radial äußersten Kavitäten leer und wirken damit als Flussbarrieren, die den magnetischen Fluss so weit wie möglich radial am jeweiligen Pol aus dem Rotor und in den Stator leiten und Streufluss minimieren. Damit lassen sich die magnetischen Flussdichteschwankungen in der Mitte des Luftspaltes zwischen Rotor und Stator vermindern. Streuverluste, welche den Wirkungsgrad vermindern, ergeben sich vor allem entlang des radial äußeren Randes des Rotors über die Stege zwischen dem Außenumfang und der jeweils radial äußersten Kavität. Es wäre daher wünschenswert, diese Außenstege so schmal wie möglich zu gestalten, aber durch die hohen Fliehkräfte, die auf die in den Kavitäten befindlichen Magneten wirken, würde bei zu schmalen Außenstegen eine Verformung des Rotors erfolgen, was wiederum breitere Stege erfordert.

Die Aufgabe der Erfindung ist es, bei einem gattungsgemäßen Rotor für einen Synchron-Antriebsmotor sowohl das Synchron- als auch Reluktanzmoment zu maximieren und dabei Flussharmonische und Flussleckagen zu minimieren.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Diese Aufgabe wird insbesondere dadurch gelöst, dass
- die äußerste Magnetlage mindestens eine mit permanentmagnetischem Material gefüllte Kavität und jede weitere Magnetlage mindestens zwei mit permanentmagnetischem Material gefüllte Kavitäten umfasst,
- jede Magnetlage eine Erstreckung eines Abschnitts einer Ellipse aufweist, jeweils mit einer langen bzw. Hauptachse und einer kurzen bzw. Nebenachse, die mit einer radialen Polachse (d-Achse) im Wesentlichen zusammenfällt,
- wobei sich die Mittelpunkte aller Ellipsen innerhalb der kleinsten Ellipse der äußeren Magnetlage liegen,
- wobei für das Verhältnis der beiden Achsen aller Magnetlagen gilt: 1,2 < Xᵢ < 4, mit Xᵢ = aᵢ/bᵢ,
- wobei das Verhältnis des größten X-Wertes zum kleinsten X-Wert nicht mehr als 1,5 beträgt,
- wobei jede zu einer der Magnetlagen gehörende Kavität in einer Radialebene eine Schnittfläche definiert, und jede dieser Schnittflächen einer Magnetlage von der zugehörigen Ellipse in zwei Teil-Schnittflächen geteilt wird, wobei das Flächenverhältnis der jeweiligen Teilschnittflächen einer Schnittfläche zwischen 1/3 und 3 liegt,
- wobei in der zweiten und jeder weiteren Magnetlage zwischen den Kavitäten jeweils Stege aus dem Rotormaterial ausgebildet sind und diese Stege an der schmalsten Stelle mindestens doppelt so breit sind wie die jeweiligen Außenstege der gleichen Magnetlage.

Die Erhöhung der Anzahl an Kavitäten für jede weitere Magnetlage ist wichtig, weil die darin angeordneten Magnete auch die Kraft für die jeweils oberen Magnetlagen mitbringen müssen. Dadurch wird zunächst die Magnetfläche größer, wodurch mehr Wirbelstromverluste generiert werden. Durch die Aufteilung in mehr und damit kleinere Kavitäten/Magnete werden die Verluste reduziert und somit die Effizienz verbessert.

Die ellipsenartige Ausgestaltung eines in Umfangrichtung länglichen Pols (Verhältnis der beiden Achsen aller Magnetlagen zwischen 1,2 und 4) ist von besonderem Vorteil, da somit das Gewicht desselben geringer ausfällt als bei einem tiefen Pol. Somit ergibt sich eine erhöhte Drehzahlfestigkeit, wobei die Stege zwischen benachbarten Kavitäten klein gehalten werden können. Vorzugsweise liegt das o.g. Verhältnis zwischen 1,5 und 3.

Die Ellipsen, jeweils mit einer Hauptachse und einer Nebenachse, fallen mit einer radialen Polachse im Wesentlichen zusammen, d.h. dass der Winkel zwischen Polsachse und Nebenachse weniger als 10° beträgt. Dabei sollen die Ellipsen ähnliche Längenverhältnisse aufweisen, also das Verhältnis des größten X-Wertes zum kleinsten X-Wert soll nicht mehr als 1,5, vorzugsweise nicht mehr als 1,2, betragen. Dadurch werden auch die Dicken der q-Flusspfade gleichmäßig, was dazu beiträgt, das die Sättigung abnimmt, wodurch die Effizienz von Motor und einem damit gekoppelten Umrichter verbessert wird. Die Mittelpunkte aller Ellipsen müssen innerhalb der kleinsten Ellipse der äußeren Magnetlage liegen, also diese sollen in etwa konzentrisch angeordnet sein, da die Regelmäßigkeit der Flussbarrieren positiven Einfluss auf die Drehmomentwelligkeit hat.

Besonders von Vorteil ist, wenn sich die Kavitäten mit und ohne Magnete gleichmäßig an die Ellipsen anschmiegen, wodurch sich auch Regelmäßigkeiten der Flussbarrieren und der Flusspfade ergeben.

Für das magnetische Feld ist der kürzeste und einfachste Weg auch der Weg, wonach sich der Magnetfluss richtet. Würde dem Magnetfluss eine einfache Möglichkeit (z.B. durch ferromagnetisches Material wie Eisen anstelle von Luft) geboten, wie zu große äußere Brücken bzw. Stege am Rotorumfang, wird der Magnetfluss diese Abkürzung als Streufluss nutzen, ohne dabei Drehmoment zu generieren. Mit den dünnen äußeren Brücken wird der Magnetfluss also dazu gezwungen, sich in den vorgesehenen q-Flusspfaden fortzupflanzen.

Gemäß einer vorteilhaften Weiterbildung der Erfindung besteht der Rotor aus Blechlamellen und die Außenstege sind an der schmalsten Stelle höchstens zweimal so breit sind wie die Dicke der Blechlamellen. Es ist von besonderem magnetischem Vorteil, wenn die äußeren Stege möglichst dünn ausgebildet sind. Herstellungstechnisch ist es meist nicht möglich, dünnere Stege zu Stanzen als die Blechdicke. Für die Akustik und gegen mechanische Schwingungen sollen die Flussbarrieren gegen den Luftspalt hin geschlossen sein. Ein besonders gutes Verhältnis ist somit die nicht mehr als die doppelte Blechstärke, vorzugsweise die 1 bis 2-fache Blechstärke. Die Blechstärke liegt typischerweise im Bereich 0,2 - 0,5 mm.

Gemäß einer vorteilhaften Weiterbildung der Erfindung ist die Länge der Außenstege mindestens viermal so lang sind wie die Dicke der Blechlamellen. Lange dünne Außenstege erhöhen die sog. Salienz d.h. das Reluktanz-Induktivitäts-Verhältnis Lq/Ld. Insbesondere sind die Außenstege für eine starke Salienzreduktion verantwortlich. Dagegen ist der Salienz -Verlust bei gleich großen, innen liegenden Stegen kleiner.

Gemäß einer vorteilhaften Weiterbildung der Erfindung erstrecken sich die Stege in einem Winkel von 70 - 110° zur zugehörigen Ellipse. Aus mechanischer Sicht sollen die Stege entlang der Kraftrichtung ausgerichtet sein, denn es ist besonders vorteilhaft, wenn die Stege rechtwinklig zur Ellipsen-Tangente angeordnet sind.

Gemäß einer vorteilhaften Weiterbildung der Erfindung sind die Permanentmagneten quaderförmig geformt und deren Längsachsen liegen an mindestens einer Stelle innerhalb deren Erstreckung parallel zur zugehörigen Ellipse. Quaderförmige Magnete sind in der Herstellung viel einfacher und günstiger als gekrümmte Magnete. Insbesondere ist das Schleifen der Magnete auf genaue Toleranzen einfacher als bei einer komplexeren Form. Eine Ausrichtung der Magnete entlang der Ellipsen ist einerseits besonders vorteilhaft, da sich dadurch regelmäßige Flusspfade und Flussbarrieren ergeben. Die übliche Magnetpolarisierung entlang der Flächennormalen (d.h. diese zeigt jeweils in Richtung des obersten Magneten) der Magnete ist besonders vorteilhaft, wenn die Magnete entlang der Ellipsen angeordnet sind.

Gemäß einer vorteilhaften Weiterbildung der Erfindung sind mindestens in einem Teil der mit permanentmagnetischem Material gefüllten Kavitäten an die Form der jeweiligen Kavität angepasste Permanentmagnetstücke eingesetzt. Bei dieser Weiterbildung sind vorzugsweise alle Kavitäten außer den beiden radial äußersten mit Permanentmagneten bestückt. Die Randkavitäten sind vorzugsweise leer, um als Flussbarrieren zu dienen und den magnetischen Fluss in die Radialrichtung zu zwingen und Leckagen so weit wie möglich zu vermeiden. Die Randkavitäten sollten jedenfalls nicht mit Permanentmagneten bestückt werden, weil dadurch eine zu starke Belastung der äußeren Stege durch Zentrifugalkräfte erfolgen würde, so dass diese äußeren Stege breiter sein müssten, was wiederum Leckströme durch diese bewirken würde.

Gemäß einer alternativen vorteilhaften Weiterbildung der Erfindung sind mindestens in einem Teil der mit permanentmagnetischem Material gefüllten Kavitäten mindestens ein Teil der mit permanentmagnetischem Material gefüllten Kavitäten mit einer eingespritzten, permanentmagnetisches Material enthaltenden erstarrten und/oder ausgehärteten Masse gefüllt. Bei dieser Weiterbildung würde in einem Spritzprozess (z.B. über ein Spritzgussverfahren) die Masse unter hohem Druck in die Kavitäten gespritzt werden, wo diese dann erstarren und/oder aushärten würde, insbesondere unter Verwendung eines Kunstharzes. Bei dieser Ausbildung können gemäß einer vorteilhaften Weiterbildung alle Kavitäten, also auch die äußeren, mit Magnetmaterial gefüllt werden, weil die Dichte des Magnetmaterials und damit die Fliehkräfte in den gefüllten äußeren Kavitäten geringer sind als wären dort Magnetstücke platziert.

Die Erfindung umfasst einen Synchron-Antriebsmotor mit einem Rotor gemäß einer der vorgenannten Ausbildungen.

Die Erfindung umfasst außerdem ein Kraftfahrzeug mit einem solchen Synchron-Antriebsmotor.

Weitere Vorteile, Merkmale und Einzelheiten ergeben sich aus der nachfolgenden Beschreibung, in der - gegebenenfalls unter Bezug auf die Zeichnung(en) - zumindest ein Ausführungsbeispiel im Einzelnen beschrieben ist. Gleiche, ähnliche und/oder funktionsgleiche Teile sind mit gleichen Bezugszeichen versehen.

Es zeigen:

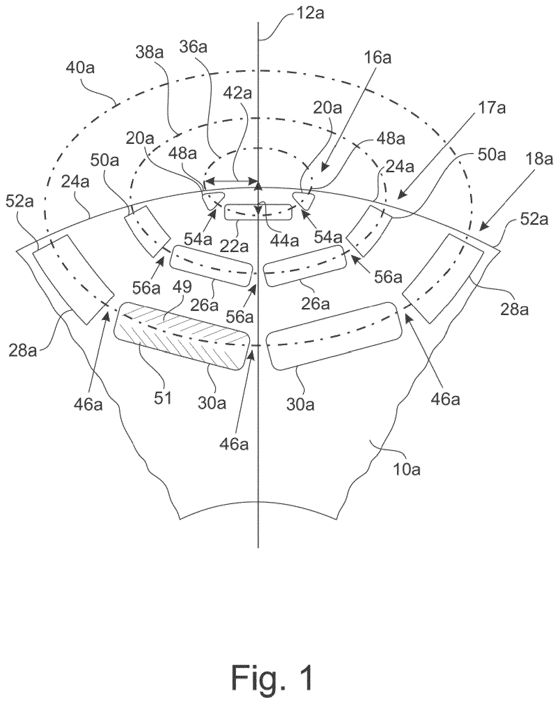

- Figur 1:: einen Teilschnitt einer ersten Ausführungsform eines Rotors für einen Synchron-Antriebsmotor;
- Figur 1:: einen Teilschnitt einer zweiten Ausführungsform eines Rotors für einen Synchron-Antriebsmotor;
- Figur 3:: ein Feldliniendiagramm durch einen Synchron-Antriebsmotor in einem Polbereich.

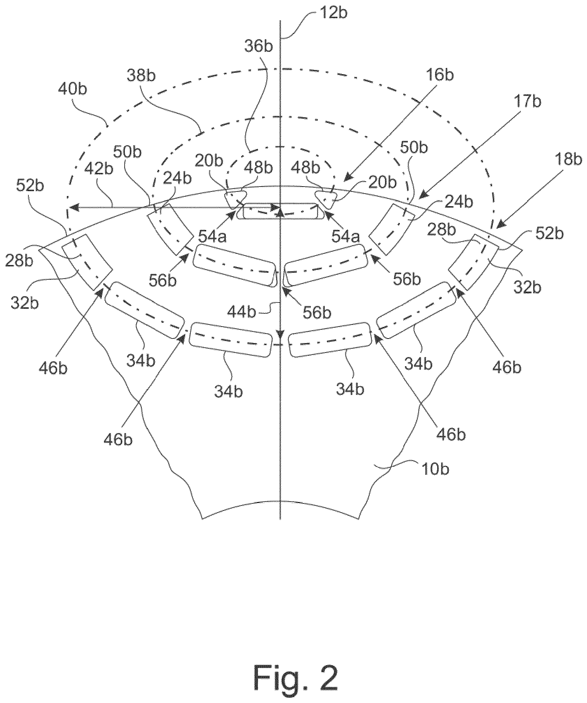

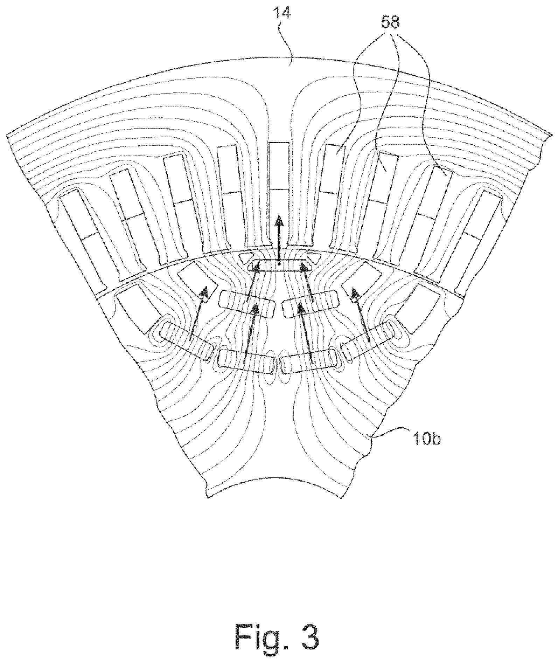

Die beiden Figuren 1 und 2 zeigen zwei Ausführungen von Rotoren 10a, 10b in der Umgebung einer Polachse 12a, 12b. Normalerweise hat ein Rotoren 10a, 10b 6 bis 10 Pole, die gleichmäßig über dem Umfang verteilt sind. Radial außerhalb des Rotors 10a, 10b ist dieser von einem in Figur 3 ausschnittsweise gezeigten Stator 14 umgeben.

Jeder Pol eines Rotors 10a, 10b weist drei Magnetlagen 16a, 16b, 17a, 17b, 18a, 18b auf, die jeweils aus einer Reihe von Kavitäten bestehen. So umfasst in Figur 1 die radial äußerste Magnetlage 16a die drei Kavitäten 20a, 22a, 20a, die mittlere Magnetlage 17a die vier Kavitäten 24a, 26a, 26a, 26a, 24a und die innerste Magnetlage 18a die vier Kavitäten 28a, 30a, 30a, 28a.

Bei Figur 2 ist es analog mit dem einzigen Unterschied, dass die innerste Magnetlage 18b sechs statt vier Kavitäten, nämlich 32b, 34b, 34b, 34b, 34b, 32b umfasst. Es können jedoch auch andere Anzahlen an Kavitäten vorgesehen werden, z.B. fünf in der dritten Magnetlage 18b.

Die drei Kavitäten 20a, 22a, 20a der äußersten Magnetlage 16a der Ausführung von Figur 1 liegen auf einem Abschnitt oder Teilbereich einer Ellipse 36a, die vier Kavitäten 24a, 26a, 26a, 26a, 24a der mittleren Magnetlage 17a liegen auf einem Abschnitt einer größeren Ellipse 38a und die vier Kavitäten 28a, 30a, 30a, 28a der innerste Magnetlage 18a liegen auf einem Abschnitt einer noch größeren Ellipse 40a. Die Mittelpunkte aller Ellipsen 36, 38, 40 liegen innerhalb der kleinsten Ellipse. Dabei meint Mitteilpunkt einer Ellipse die Mitte zwischen den beiden Brennpunkten der Ellipse. In der Ausführung gemäß Figur 2 ist die Situation analog.

In Figur 1 sind für die kleinste Ellipse 36a und in Figur 2 für die größte Ellipse 40b jeweils die Hauptachsen 42a, 42b und Nebenachsen 44a, 44b dargestellt.

Die jeweiligen Verhältnisse zwischen den Hauptachsen 42a, 42b und Nebenachsen 44a, 44b, nämlich Xa = Hauptachse 42a/Nebenachse 44a und mit Xb = Hauptachse 42b/Nebenachse 44b, liegen für alle Ellipsen 36-40 zwischen 1,2 und 4. Für die in Figur 1 gezeigte Ellipse 36a beträgt Xa etwa 1,6, für die in Figur 2 gezeigte Ellipse 40b beträgt Xb etwa 1,9.

In einer Ausführungsform der Erfindung sind am Rand liegende Kavitäten 20a, 24a, 28a bzw. 20b, 24b, 28b leere Luftkammern und wirken als Flussbarrieren für die magnetischen Feldlinien. Demgegenüber sind in den dazwischen liegenden Kavitäten 22a, 26a, 30a bzw. 22b, 26b, 30b Permanentmagnete eingesetzt. Vorzugsweise sind diese Permanentmagnete quaderförmig, was die Herstellung und Einpassung erleichtert. Die Kavitäten 22a, 26a, 30a bzw. 22b, 26b, 30b weisen an den jeweiligen Längsenden Verlängerungen auf, um zwischen diesen Kavitäten ausgebildete Stege 46a, 46b mit definiertem Querschnitt zu formen.

In einer anderen Ausführungsform sind alle Kavitäten mit magnetischem Material ausgefüllt, das als plastische Masse (z.B. in einem Spritzgussverfahren) eingespritzt wird und dann in der Kavität erstarrt und/oder aushärtet.

Anhand der linken Kavität 30a in Figur 1 sei erläutert, dass jede Kavität in einer Radialebene eine Schnittfläche (auch 30a) definiert, und jede dieser Schnittflächen einer Magnetlage 18a von der zugehörigen Ellipse 40a in zwei Teil-Schnittflächen 49, 51 geteilt wird, wobei das Flächenverhältnis der jeweiligen Teilschnittflächen 49, 51 einer Schnittfläche 30a (Teil-Schnittflächen 49 zu Teil-Schnittflächen 51) zwischen 0,5 und 2 liegt. Im dargestellten Fall von Figur 1 ist das Flächenverhältnis ungefähr 1.

Zwischen dem Außenrand des jeweiligen Rotors 10a, 10b der der jeweils äußersten Kavität 20a, 24a, 28a in Figur 1 und 20b, 24b und 28.b in Figur 2 erstrecken sich Außenstege 48a, 50a, 52a bzw. 48b, 50b, 52b. Zwischen den einzelnen Kavitäten befinden sich weitere Stege 54a, 54b in der jeweils äußeren Magnetlage 16a, 16b, Stege 56a, 56b in der jeweils mittleren Magnetlage 18a, 18b und Stege 46a, 46b in der jeweils innersten Magnetlage 18a.

Bei der mittleren und inneren Magnetlage 17a, 18a, 17b, 18b sind diese Stege 46a, 46b 56a, 56b an der schmalsten Stelle mindestens doppelt so breit sind wie die jeweiligen Außenstege 50a, 50b, 52a, 52b der gleichen Magnetlage 17a, 17b, 18a, 18b.

In Figur 3 ist die Polanordnung gemäß Figur 2 mit dem Rotor 10b, dem Stator 14 und den Magnetfeldlinien dargestellt. Der Stator 14 umfasst eine Reihe von stromdurchflossenen Spulen, von den rotorseitigen Kavitäten sind die äußeren Kavitäten als Hohlräume ausgebildet, in den restlichen Kavitäten sind Permanentmagnete angeordnet. Der Figur 3 ist zu entnehmen, dass die Magnetfeldlinien 60 zum größten Teil gebündelt radial aus dem Rotor 10b austreten und in den Stator 14 eintreten können.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

### Bezugszeichenliste

- 10 a,b: Rotoren
- 12 a,b: Polachse
- 14: Stator
- 16 a,b,: Magnetlage
- 17 a,b: Magnetlage
- 18 a,b: Magnetlage
- 20 a,b: Kavität
- 22 a,b: Kavität
- 24 a,b: Kavität
- 26 a,b: Kavität
- 28 a,b: Kavität
- 30 a,b: Kavität
- 32 a,b: Kavität
- 34 a,b: Kavität
- 36 a,b: Ellipse
- 38 a,b: Ellipse
- 40 a,b: Ellipse
- 42 a,b: Hauptachse
- 44 a,b: Nebenachse
- 46 a,b: Steg
- 48 a,b: Außensteg
- 49: Teilschnittfläche
- 50 a,b: Außensteg
- 51: Teilschnittfläche
- 52 a,b: Außensteg
- 54 a,b: Steg
- 56 a,b: Steg
- 58: Spulen
- 60: Magnetfeldlinien

## Patentansprüche

1. Rotor für einen Synchron-Antriebsmotor eines elektrisch betriebenen Kraftfahrzeugs mit mehreren Rotorpolen, wobei jeder Rotorpol mindestens drei radial hinter einander angeordnete U-förmige Magnetlagen (16, 17, 18) aufweist, und jede Magnetlage (16, 17, 18) eine Reihe von mindestens drei Kavitäten (10 - 34) umfasst, von denen mindestens die inneren Kavitäten (22, 26, 30, 34) mit permanentmagnetischem Material gefüllt sind und ferner die beiden äußeren Kavitäten (20, 24, 28) zu einem zu einem Stator (14) hin gebildeten Rotorspalt hin jeweils mit einem Außensteg (48, 50, 52) abgeschlossen sind,
wobei
- die äußerste Magnetlage (16) mindestens eine mit permanentmagnetischem Material gefüllte Kavität (22) und jede weitere Magnetlage (17, 18) mindestens zwei mit permanentmagnetischem Material gefüllte Kavitäten (26, 30) umfasst
**dadurch gekennzeichnet dass**,
- jede Magnetlage (16, 17, 18) eine Erstreckung eines Abschnitts einer Ellipse (36, 38, 40) aufweist, jeweils mit einer langen Achse (42) und einer kurzen Achse (44), die mit einer radialen Polachse (d) im Wesentlichen zusammenfällt,
- wobei sich die Mittelpunkte aller Ellipsen (36, 38, 40) innerhalb der kleinsten Ellipse (36) der äußeren Magnetlage (16) liegen,
- wobei für das Verhältnis der beiden Achsen aller Magnetlagen (16, 17, 18) gilt: 1,2 < Xᵢ < 4, mit Xᵢ = aᵢ/bᵢ,
- wobei das Verhältnis des größten X-Wertes zum kleinsten X-Wert nicht mehr als 1,5 beträgt,
- wobei jede zu einer der mindestens drei Magnetlagen gehörende Kavität in einer Radialebene eine Schnittfläche (49+51) definiert, und jede dieser Schnittflächen (49+51) einer Magnetlage (16, 17, 18) von der zugehörigen Ellipse (16, 17, 18) in zwei Teil-Schnittflächen (49, 51) geteilt wird, wobei das Flächenverhältnis der jeweiligen Teilschnittflächen (49, 51) einer Schnittfläche (49+51) zwischen 1/3 und 3 liegt,
- wobei in der zweiten und jeder weiteren Magnetlage (17, 18) zwischen den Kavitäten jeweils Stege (56, 46) aus dem Rotormaterial ausgebildet sind und diese Stege (56, 46) an der schmalsten Stelle mindestens doppelt so breit sind wie die jeweiligen Außenstege (50, 52) der gleichen Magnetlage (17, 18).

2. Rotor nach Anspruch 1, **dadurch gekennzeichnet, dass** der Rotor aus Blechlamellen besteht und die Außenstege (48, 50, 52) an der schmalsten Stelle höchstens zweimal so breit sind wie die Dicke der Blechlamellen.

3. Rotor nach Anspruch 2, **dadurch gekennzeichnet, dass** die Länge der Außenstege (48, 50, 52) mindestens viermal so lang ist wie die Dicke der Blechlamellen.

4. Rotor nach einem der vorherigen Ansprüche, **dadurch gekennzeichnet, dass** sich die Stege (46, 54, 56) in einem Winkel von 70 - 110° zur zugehörigen Ellipse (36, 38, 40) erstrecken.

5. Rotor nach einem der vorherigen Ansprüche, **dadurch gekennzeichnet, dass** das permanentmagnetische Material aus quaderförmig geformten Magneten besteht, wobei die Magneten in einer Radialebene eine im Wesentlichen rechteckige Schnittfläche (48+49) definieren und die Längsachse dieses Schnittflächenrechtecks an mindestens einer Stelle innerhalb dessen Erstreckung parallel zur zugehörigen Ellipse (36, 38, 40) liegen.

6. Rotor nach einem der vorherigen Ansprüche, **dadurch gekennzeichnet, dass** mindestens in einem Teil der mit permanentmagnetischem Material gefüllten Kavitäten (20 - 34) an die Form der jeweiligen Kavität (20 - 34) angepasste Permanentmagnetstücke eingesetzt sind.

7. Rotor nach einem der vorherigen Ansprüche, **dadurch gekennzeichnet, dass** mindestens ein Teil der mit permanentmagnetischem Material gefüllten Kavitäten (20- 34) mit einer eingespritzten, permanentmagnetisches Material enthaltenden erstarrten oder ausgehärteten Masse gefüllt sind.

8. Synchron-Antriebsmotor umfassend einen Rotor nach einem der vorherigen Ansprüche.

9. Kraftfahrzeug, umfassend einen Synchron-Antriebsmotor nach dem vorherigen Anspruch.

## Claims

1. Rotor for a synchronous drive motor of an electrically driven motor vehicle having a plurality of rotor poles, wherein each rotor pole has at least three U-shaped magnetic layers (16, 17, 18) arranged radially one behind the other, and each magnetic layer (16, 17, 18) comprises a series of at least three cavities (10 - 34), of which at least the inner cavities (22, 26, 30, 34) are filled with a permanent magnetic material, and furthermore the two outer cavities (20, 24, 28) are closed in each case by an outer web (48, 50, 52) facing a rotor gap formed by a stator (14), wherein
- the outermost magnetic layer (16) comprises at least one cavity (22) filled with a permanent magnetic material and each other magnetic layer (17, 18) comprises at least two cavities (26, 30) filled with permanent magnetic material,
**characterized in that**
- each magnetic layer (16, 17, 18) has an extension of a section of an ellipse (36, 38, 40) respectively having a long axis (42) and a short axis (44), which substantially coincides with a radial pole axis (d),
- wherein the center points of all ellipses (36, 38, 40) lie within the smallest ellipse (36) of the outer magnetic layer (16),
- wherein 1.2 < Xᵢ < 4, where Xᵢ = aᵢ/bᵢ applies to the ratio of the two axes of all magnetic layers (16, 17, 18),
- wherein the ratio of the largest X value to the smallest X value is not more than 1.5,
- wherein each cavity belongs to one of the at least three magnetic layers and defines an interface (49+51) in a radial plane, and each of these interfaces (49+51) of a magnetic layer (16, 17, 18) is divided by the associated ellipse (16, 17, 18) into two partial interfaces (49, 51), wherein the surface ratio of each partial interface (49, 51) to an interface (49+51) lies between 1/3 and 3,
- wherein webs (56, 46) made from the rotor material are formed between each of the cavities in the second and each additional magnetic layer (17, 18), and these webs (56, 46) are at least twice as wide at the narrowest point as the respective outer webs (50, 52) of the same magnetic layer (17, 18).

2. Rotor according to claim 1, **characterized in that** the rotor consists of sheet metal laminates and the outer webs (48, 50, 52) are at most twice as wide at the narrowest point as the thickness of the sheet metal laminates.

3. Rotor according to claim 2, **characterized in that** the length of the outer webs (48, 50, 52) is at least four times as long as the thickness of the sheet metal laminates.

4. Rotor according to one of the preceding claims, **characterized in that** the webs (46, 54, 56) extend at an angle of 70 - 110° to the associated ellipse (36, 38, 40).

5. Rotor according to one of the preceding claims, **characterized in that** the permanent magnetic material consists of cuboidally shaped magnets, wherein the magnets define a substantially rectangular interface (48+59) in a radial plane, and the longitudinal axis of this interface rectangle lies parallel to the associated ellipse (36, 38, 40) at at least one point within its extension.

6. Rotor according to one of the preceding claims, **characterized in that** permanent magnet pieces, adapted to the shape of the respective cavity (20 - 34), are used in at least one part of the cavities (20 - 34) filled with permanent magnetic material.

7. Rotor according to one of the preceding claims, **characterized in that** at least one part of the cavities (20 - 34) filled with permanent magnetic material are filled with an injected solidified or cured mass containing permanent magnetic material.

8. Synchronous drive motor comprising a rotor according to one of the preceding claims.

9. Motor vehicle comprising a synchronous drive motor according to the preceding claim.

## Revendications

1. Rotor, destiné à un moteur d'entraînement synchrone d'un véhicule automobile électrique, pourvu de plusieurs pôles de rotor, chaque pôle de rotor comportant au moins trois couches d'aimants (16, 17, 18) en forme de U, placées les unes derrière les autres en direction radiale, et chaque couche d'aimants (16, 17, 18) comprenant une rangée d'au moins trois cavités (10 à 34), dont au moins les cavités internes (22, 26, 30, 34) sont remplies d'une matière à aimantation permanente, et par ailleurs, les deux cavités externes (20, 24, 28) étant fermées chacune par un listel extérieur (48, 50, 52) en direction d'un jeu de rotor créé en direction d'un stator (14),
- la couche d'aimants (16) la plus à l'extérieur comprenant au moins une cavité (22) remplie d'une matière à aimantation permanente et chaque couche d'aimants (17, 18) supplémentaire comprenant au moins deux cavités (26, 30) remplies d'une matière à aimantation permanente,
**caractérisé en ce que**
- chaque couche d'aimants (16, 17, 18) comporte une extension d'un segment d'une ellipse (36, 38, 40), dotée respectivement d'un axe long (42) et d'un axe court (44), qui coïncide sensiblement avec un axe radial de pôle (d),
- les points médians de toutes les ellipses (36, 38, 40) se situant à l'intérieur de la plus petite ellipse (36) de la couche externe d'aimants (16),
- pour le rapport des deux axes de toutes les couches d'aimants (16, 17, 18) étant applicable : 1, 2 < Xᵢ < 4, mit Xᵢ = aᵢ/bᵢ,
- le rapport de la valeur la plus élevée de X à la valeur la moins élevée de X n'étant pas supérieur à 1,5,
- chaque cavité faisant partie de l'une des au moins trois couches d'aimants définissant dans le plan radial une surface d'intersection (49+51) et chacune desdites surfaces d'intersection (49+51) d'une couche d'aimants (16, 17, 18) étant divisée par l'ellipse (16, 17, 18) associée en deux surfaces d'intersection partielles (49, 51), le rapport de surface des surfaces d'intersection partielles (49, 51) respectives d'une surface d'intersection (49+51) se situant entre 1/3 et 3,
- dans la deuxième et dans chacune des couches d'aimants (17, 18) étant respectivement conçus entre les cavités des listels (56, 46) constitués de la matière du rotor et sur leur zone la plus étroite, lesdits listels (56, 46) ayant au moins le double de la largeur des listels externes (50, 52) respectifs de la même couche d'aimants (17, 18) .

2. Rotor selon la revendication 1, **caractérisé en ce que** le rotor est constitué de lamelles de tôle et sur leur zone la plus étroite, les listels externes (48, 50, 52) ont une largeur qui correspond au plus au double de l'épaisseur des lamelles de tôle.

3. Rotor selon la revendication 2, **caractérisé en ce que** la longueur des listels externes (48, 50, 52) correspond à au moins le quadruple de l'épaisseur des lamelles de tôle.

4. Rotor selon l'une quelconque des revendications précédentes, **caractérisé en ce que** les listels (46, 54, 56) s'étendent sous un angle de 70 à 110° par rapport à l'ellipse (36, 38, 40) correspondante.

5. Rotor selon l'une quelconque des revendications précédentes, **caractérisé en ce que** la matière à aimantation permanente est constituée d'aimants de forme parallélépipédique, dans un plan radial, les aimants définissant une surface d'intersection (48+49) sensiblement rectangulaire et sur au moins une zone à l'intérieur de son extension, les axes longitudinaux dudit rectangle de surface d'intersection se situant à la parallèle de l'ellipse (36, 38, 40) associée.

6. Rotor selon l'une quelconque des revendications précédentes, **caractérisé en ce qu'**au moins dans une partie des cavités (20 à 34) remplies d'une matière à aimantation permanente sont insérées des pièces à aimantation permanente adaptées à la forme de la cavité (20 à 34).

7. Rotor selon l'une quelconque des revendications précédentes, **caractérisé en ce qu'**au moins une partie des cavités (20 à 34) remplies d'une matière à aimantation permanente sont remplies d'une masse figée ou solidifiée, contenant une matière à aimantation permanente injectée.

8. Moteur d'entraînement synchrone, comprenant un rotor selon l'une quelconque des revendications précédentes.

9. Véhicule automobile, comprenant un moteur d'entraînement synchrone selon la revendication précédente.
